# EUROPEAN PATENT APPLICATION

(11) **EP 1 777 029 A1**
(43) Date of publication of application: **25.04.2007**
(21) Application number: 05109824.2
(22) Date of filing: 21.10.2005
(51) Int. Cl.: B23K 11/31

(54) **A tool for spot welding with two arms each carrying an electrode and means for moving the arms along a rectilinear path**

(71) Applicant: ABB AB, 721 83 Västeras (SE)
(72) Inventor: Ohlsson, Mikael, 290 60 Kyrkhult (SE)
(74) Representative: Olsson, Jan

(57) **Abstract**

The present invention relates to a tool for spot welding comprises a tool frame (12), two arms (13,14) each carrying an electrode (15,16) and means (19) adapted to connect said arms (13,14) to said frame (12) while allowing them to move with respect to each other for moving the electrodes (15,16) towards and away from each other for changing the distance there between. The tool further comprises means (20,21,22) adapted to mount said arms (13,14) movable with respect to each other along a substantially rectilinear path, the means (20,21,22) moving said arms (13,14) with respect to each other, so that said electrodes (15,16) are moved towards and away from each other.

## Description

### TECHNICAL FIELD OF THE INVENTION AND PRIOR ART

The present invention relates to a tool for spot welding.

Any type of tool designed to be used for spot welding is comprised. Thus, said tool may be a hand tool, in which a mutual movement of arms carrying electrodes may be accomplished by hand power or by a power means, for instance receiving power from a battery, actuated by pushing a button or the like. Another conceivable type of such a tool is a tool adapted to be applied to a tool flange of an industrial spot welding robot, for instance for carrying out spot welding operations on a car body within the automobile industry. The tool may also be of the type to be fixed to a stand for joining members brought into the intermediate space between said electrodes by spot welding.

There are mainly two types of known tools for spot welding or so-called spot welding guns: So-called X-guns and C-guns. A C-gun has the approximate shape of a C comprising two arms. A first welding electrode is movably arranged in a guide at one arm of the C and moves towards and away from an opposite second welding electrode at the opposite arm. Thus, the arms are fixed with respect to each other in such a tool. An X-gun comprises a first movable electrode arm and an opposite fixed electrode arm. Such an X-gun is disclosed for instance in WO 2005/005089.

It is pointed out that normally one of the arms of tools of this type is fixed with respect to said frame, whereas the other is movable for obtaining said mutual movement of the arms and by that of the electrodes. However, it is within the scope of the present invention to have both arms movable with respect to said frame.

When carrying out spot welding work with a tool of this type and the application is suddenly changed, a tool having longer, shorter or otherwise differently designed arms may be required for being able to carry out the welding, for instance for joining members in a position hidden behind other members. It is in such a case necessary to replace the tool by another tool being differently designed.

### SUMMARY OF THE INVENTION

The object of the present invention is to provide a tool for spot welding of the type defined in the introduction being improved with respect to such tools already known.

This object is according to the invention obtained by providing such a tool, which comprises means adapted to mount said arms movable with respect to each other along a substantially rectilinear path for moving said arms with respect to each other for moving said electrodes towards and away from each other.

Thus, the inventor has realised that it is a problem that it is costly to have a set of known spot welding tools for being able to carry out different spot welding works. This problem is occurring particularly frequently for industrial robots arranged in a production line, since they have to get access to different details differently easy to reach. By mounting said arms to said frame in this way it is possible to connect them to the frame allowing them to be easily removed from the frame and replaced by other arms being differently designed for enabling a change of application of the tool. Thus, there is no need of a set of such expensive tools for being able to carry works within a wide range, but only a set of much less costly arms differently designed is needed for that sake. Any types of appearances of said arms with electrodes may be obtained by the use of the same frame with equipment, such as possible power means, associated therewith thanks to the arrangement of the arm movable along said substantially rectilinear path.

According to an embodiment of the invention said mounting means is adapted to mount said arms movable with respect to each other along a substantially rectilinear path for moving said arms with respect to each other according to a translational movement transversely to the longitudinal extension thereof for moving said electrodes towards and away from each other.

According to another embodiment of the invention said connecting means is designed to detachably secure said arms to said mounting means so as to allow replacement thereof by other arms, for example arms having other shapes, dimensions and/or electrodes, so that the possible use of said tools may be changed by simply replacing the arms thereof. Said connecting means may then comprise male members, such as bolts, engagable with corresponding female members, such as holes, in the respective arm and in members of said mounting means. This means that the arms may easily be reliably and quickly exchanged when there is a need to do so.

According to another embodiment of the invention said mounting means comprises, for each arm, at least one bracket connected to said frame and said connecting means is adapted to fixedly connect the respective arm to said at least one bracket.

According to another embodiment of the invention said mounting means is adapted to mount said arms to said frame to extend substantially in parallel with each other. This makes it easy to reliably mount the arms so that the electrodes are perfectly aligned with each other.

According to another embodiment of the invention said mounting means is adapted to mount said arms to said frame to extend substantially perpendicularly to said substantially rectilinear path, which is favourable for reliably obtaining the movements necessary for spot welding.

According to another embodiment of the invention said mounting means is adapted to fixedly mount one of said arms to said frame. This simplifies the construction of the tool and is mostly preferred.

According to another embodiment of the invention said mounting means comprises a substantially rectilinear guide arranged on said frame for guiding at least one of said arms in a substantially rectilinear path along the frame.

According to another embodiment of the invention said mounting means is adapted to mount said arms with the tips of said electrode pointing substantially in parallel with said substantially rectilinear path.

According to another embodiment of the invention the tool comprises a power means arranged on the frame and to act upon at least one of said arms for producing a movement of the arms with respect to each other along said substantially rectilinear path. This power means may for instance be a servo motor or a compressed-air cylinder.

According to another embodiment of the invention said power means is of a type obtaining said movement by varying its length, which constitutes a simple and reliable way of obtaining said movement along said substantially rectilinear path.

According to another embodiment of the invention the tool comprises means for securing it to another member, which may for instance be a tool flange of an industrial robot or a stand.

The invention also relates to an industrial robot for spot welding provided with a spot welding tool according to the present invention. This means that this industrial robot may be given different missions and be prepared for these missions by solely exchanging the arms of said tool without any need of exchanging the entire tool.

Further advantages as well as advantageous features of the invention appear from the following description and the other dependent claims.

### BRIEF DESCRIPTION OF THE DRAWINGS

With reference to the appended drawings below follows a specific description of preferred embodiments of the invention cited as examples. In the drawings:
- Fig 1: is a simplified perspective view of an industrial robot dressed for spot welding and provided with a tool for spot welding according to the present invention,
- Fig 2: is a perspective view of a tool for spot welding according to the present invention,
- Fig 3: is a side elevation of the tool according to Fig 2,
- Fig 4: is a perspective view of a tool according to Fig 2 with the arms separated with respect to Fig 2 and provided with another type of electrodes,
- Fig 5: is a side elevation of a tool according to the present invention provided with another type of arms than the tool according to Fig 2,
- Fig 6: is a side elevation of a tool according to the invention provided with a further different type of arms,
- Fig 7: is a side elevation of a tool according to the invention provided with a still further different type of arms, and
- Fig 8: is a very schematic view illustrating how a tool according to the present invention may be secured to a stand for co-operating with an industrial robot.

### DETAILED DESCRIPTION OF PREFERRED EMBODIMENTS OF THE INVENTION

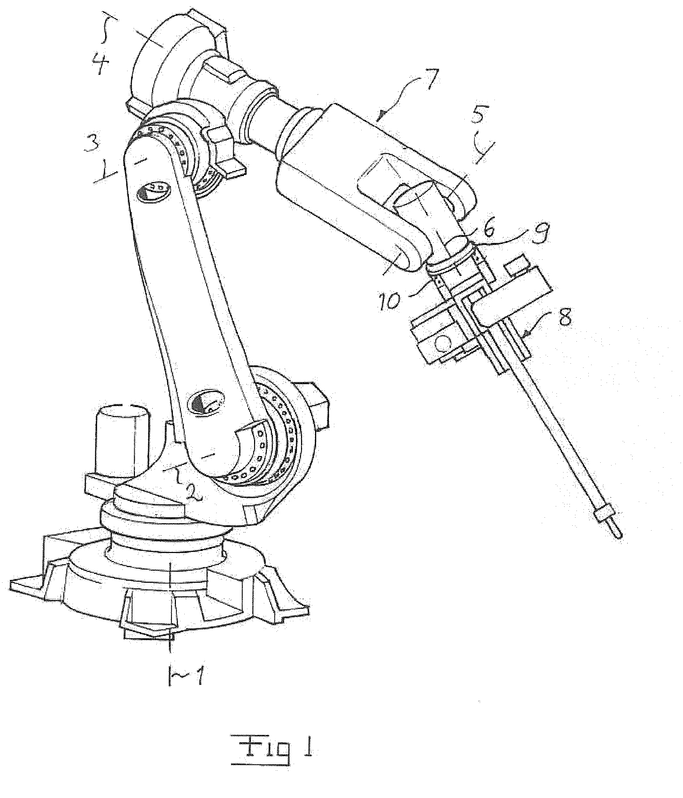

An industrial robot 7 dressed for spot welding is schematically illustrated in Fig 1. Cabling has been omitted in the figure for simplifying purpose, although it may in this type of robot be hidden to a large extent. This robot is of a conventional type in the sense that it has six axis for obtaining a maximum freedom of movement of a tool, here a tool for spot welding 8 secured to a tool flange 9 of the robot. The six axes are indicated by reference numerals 1-6. Such a robot may be used for spot welding work within different types of industry, and a particular frequent application of such a robot is within the automobile industry for carrying out spot welding work on car bodies.

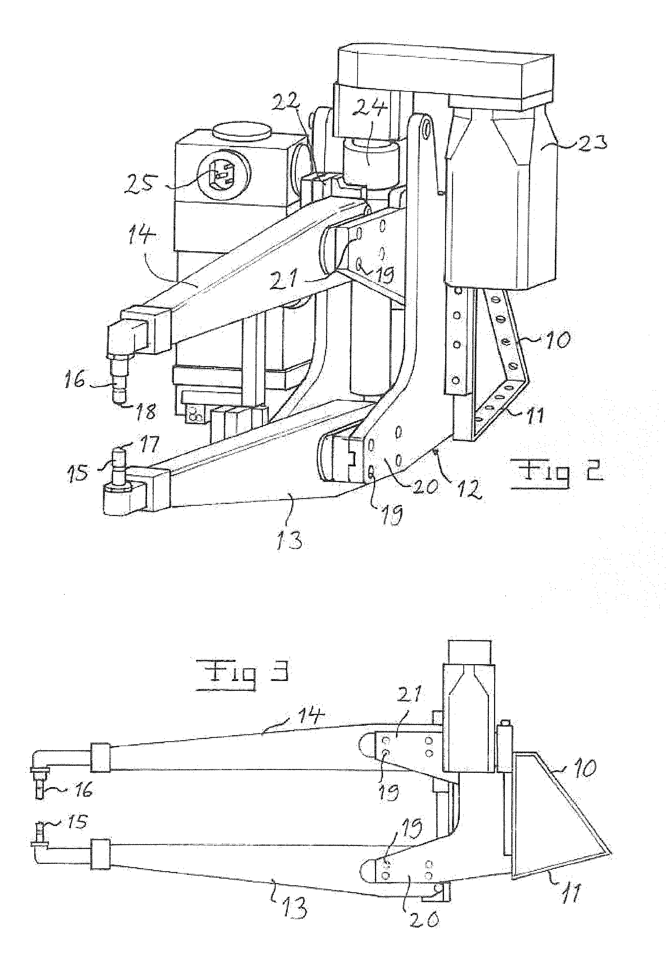

The tool according to the invention will now be further described while making reference to Fig 2 and 3. The tool has means 10, 11 for securing the tool to a tool flange of an industrial robot or for instance a stand. These means are constituted by frames provided with holes for securing the tool by for instance bolts. Thus, the tool may be secured by using the means 10 or 11 depending upon the desired direction of the tool in the secured state.

The tool has a frame 12 and two arms 13, 14 extending substantially in parallel with each other and carrying an electrode 15, 16 each at one end of the arms with the electrode tips 17, 18 aligned. The arms are connected by connecting means in the form of bolts 19 to brackets 20, 21 having holes for the bolts extending into corresponding holes in the arms.

One 13 of the arms is secured to a bracket 20 belonging to the tool frame 12, so that it is fixedly secured to the frame. The bracket 21 of the other arm is received in a rail-like guide means 22 and movable with respect to the frame 12 and by that with respect to the other arm 13 in a rectilinear path substantially perpendicularly to the longitudinal extension of the arms.

The tool further comprises a power means including an electrical motor 23 and a power member 24 of the type able to varying its length in the form of a screw jacket or cylinder driven by the motor 23. It is also schematically indicated at 25 how the motor 23 may be fed with electric power for moving the arm 14 with respect to the arm 13 by prolonging or shortening the screw cylinder 24.

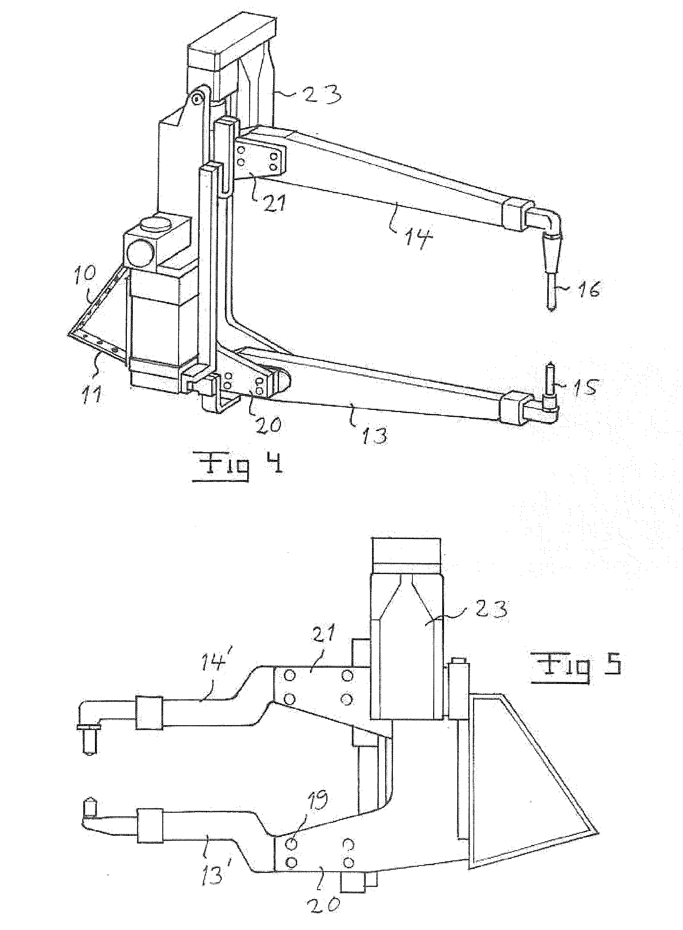

Accordingly, when two members are to be joined by spot welding the motor 23 is controlled to bring the electrodes 15, 16 into the welding position by moving them in the direction towards each other. Fig 4 schematically illustrates how the arms have been moved away from each other with respect to the position according to Fig 2 and 3 for carrying out a spot welding operation. The electrodes have in this case been replaced by electrodes of a longer extension, so that the spot welding gun may join pieces together in an application where there are obstacles making it impossible to have the arms as close to each other as illustrated in Fig 3 during the welding operation.

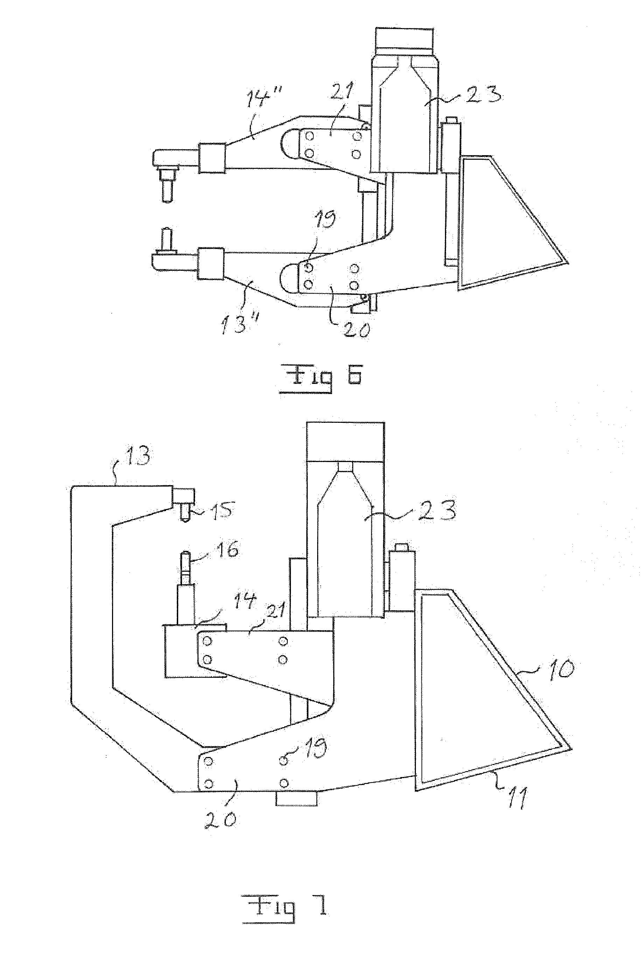

Thanks to the mounting of the arms 13, 14 of the tool according to the invention movable along said rectilinear path for carrying out a translational movement transversally to the longitudinal extension thereof it is possible to replace the arms by arms of other shapes, dimensions and/or electrodes for changing the possible application of the tool. This may in the present case be easily done by loosening the connecting means in the form of the bolts 19 and removing the arms for securing other arms, such as 13' and 14' in Fig 5, to the brackets 20, 21. Accordingly, there is no need of replacing the entire spot welding gun when spot welding works putting different demands on the shape of the arms have to be carried out. Fig 5 and 6 shows two of an infinite number of possible appearances of such arms.

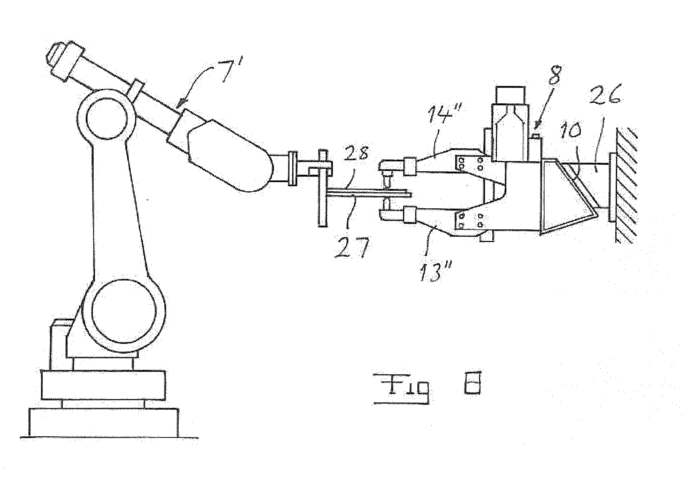

Fig 7 shows how arms 13, 14 may be mounted to the same tool frame while providing a so-called C-gun, so that this option is also there without any need to change the tool when a "C-gun" is most preferred for a particular welding operation.

Fig 8 illustrates another possible application of a tool 8 according to the present invention. The tool is here through the securing means 10 secured to a stand 26, and an industrial robot 7' introduces pieces 27, 28 to be joined by welding between the electrode arms 13", 14" of the tool. The electrode arms are then controlled to carry out a movement with respect to each other along said rectilinear path for arriving to the welding position. After the welding they are controlled to move apart along said path for being ready for the next welding operation.

The invention is of course not in any way restricted to the embodiments described above, but many possibilities to modifications thereof would be apparent to a person with ordinary skill in the art without departing from the basic idea of the invention as defined in the appended claims.

As already mentioned in the introduction the tool according to the invention may be provided with one or more grips for being used as a hand tool, and it may then have a battery for a mutual movement of the arms, be connected to compressed air for this movement or have means for obtaining this movement by hand power.

Although it is preferred to have the arms extending substantially perpendicularly to said rectilinear path of movement they may also be arranged to make an angle different from 90° with this path, which in fact is the case for the parts of the arms in the embodiment shown in Fig 5 closest to the frame and also in the embodiment according to Fig 7.

## Claims

1. A tool for spot welding comprising a tool frame (12), two arms (13, 13', 13",14, 14', 14") carrying an electrode (15, 16) each and means (19) adapted to connect said arms to said frame while allowing them to move with respect to each other for moving the electrodes towards and away from each other for changing the distance therebetween, **characterized in that** it further comprises means (20-22) adapted to mount said arms movable with respect to each other along a substantially rectilinear path for moving said arms with respect to each other for moving said electrodes towards and away from each other.

2. A tool according to claim 1, **characterized in that** said mounting means (20-22) is adapted to mount said arms (13, 13', 13", 14, 14', 14") movable with respect to each other along a substantially rectilinear path for moving said arms with respect to each other according to a translational movement transversely to the longitudinal extension thereof for moving said electrodes towards and away from each other.

3. A tool according to claim 1 or 2, **characterized in that** said connecting means (19) is designed to detachably secure said arms (13, 13', 13",14, 14', 14") to said mounting means (20, 21) so as to allow replacement thereof by other arms, for example arms having other shapes, dimensions and/or electrodes.

4. A tool according to claim 3, **characterized in that** said connecting means comprises male members (19), such as bolts, engagable with corresponding female members, such as holes, in the respective arm (13, 13', 13",14, 14', 14") and in members of said mounting means (20, 21).

5. A tool according to claim 3 or 4, **characterized in that** said mounting means comprises, for each arm, at least one bracket (20, 21) connected to said frame (12) and that said connecting means is adapted to fixedly connect the respective arm (13, 13', 13",14, 14', 14") to said at least one bracket.

6. A tool according to any of the preceding claims, **characterized in that** said mounting means (20, 21) is adapted to mount said arms (13, 13', 13",14, 14', 14") to said frame to extend substantially in parallel with each other.

7. A tool according to any of the preceding claims, **characterized in that** said mounting means (20, 21) is adapted to mount said arms to said frame (12) to extend substantially perpendicularly to said substantially rectilinear path.

8. A tool according to any of the preceding claims, **characterized in that** said mounting means (20) is adapted to fixedly mount one (13, 13', 13") of said arms to said frame (12).

9. A tool according to any of the preceding claims, **characterized in that** said mounting means comprises a substantially rectilinear guide (22) arranged on said frame (12) for guiding at least one (14, 14', 14") of said arms in a substantially rectilinear path along the frame.

10. A tool according to any of the preceding claims, **characterized in that** said mounting means (20, 21) is adapted to mount said arms (13, 13', 13",14, 14', 14") with the tips (17, 18) of said electrodes pointing substantially in parallel with said substantially rectilinear path.

11. A tool according to any of the preceding claims, **characterized in that** it comprises a power means (23, 24) arranged on the frame (12) and to act upon at least one (14, 14', 14") of said arms for producing a movement of the arms with respect to each other along said substantially rectilinear path.

12. A tool according to claim 11, **characterized in that** said power means (24) is of a type obtaining said movement by varying its length.

13. A tool according to any of the preceding claims, **characterized in that** it comprises means (10, 11) for securing the tool to another member.

14. A tool according to claim 13, **characterized in that** said securing means (10, 11) is adapted to secure the tool to a tool flange (9) of an industrial robot.

15. A tool according to claim 13, **characterized in that** said securing means (10, 11) is adapted to secure said tool to a stand (26).

16. An industrial robot for spot welding provided with a spot welding tool according to any of claims 1-15.
